# EUROPEAN PATENT APPLICATION

(11) **EP 3 148 114 A1**
(43) Date of publication of application: **29.03.2017**
(21) Application number: 14892511.8
(22) Date of filing: 10.11.2014
(51) Int. Cl.: H04L 12/24

(54) **DEVICE MANAGEMENT SESSION TRIGGERING METHOD, DEVICE, SYSTEM AND COMPUTER STORAGE MEDIUM**

(30) Priority: 20.05.2014 CN 201410213935
(71) Applicant: Xi'an Zhongxing New Software Co. Ltd., Xian, Shaanxi 710114 (CN)
(72) Inventor: XU, Luyong, Xian Shaanxi 710114 (CN)
(74) Representative: Benson, Christopher
(86) International application number: PCT/CN2014/090701
(87) International publication number: WO 2015/176501

(57) **Abstract**

Disclosed are a triggering method, device and system for a device management (DM) session and a computer storage medium. Herein, the method includes: acquiring firmware version information corresponding to a latest software upgrade package, here the firmware version information is used for determining by a terminal device whether to send a DM session request to a server and whether to initiate a Firmware Over The Air (FOTA) update operation; and sending a notification message including the firmware version information.

## Description

### Technical Field

The present invention relates to a device management (DM) session technology in the field of wireless communication, and particularly, to a triggering method, device and system for a DM session and a computer storage medium.

### Background

With the increasingly rich and complex of data services, the dependence of the data services on the terminal device is getting higher and higher. As a carrier for the user using the data services, the terminal device has become an indispensable part of the mobile operation service system. In order to enable the terminal device with the rapid upgrading capability and to meet the increasingly fierce competition in the market, the time cycle of the future terminal device manufacturer introducing new functions of the end-products becomes shorter and shorter. In order to provide an effective and simple upgrading service, the Firmware Over The Air (FOTA) update technology has become a very important technology in the DM and has received great attention in the communication industry.

The FOTA technology is a technology performing remote management via the air interface, and through the FOTA, not only application software of the terminal device but also system software of the terminal device can be updated. The standard DM protocol defines two modes for triggering a DM session to start the FOTA upgrade process:
mode one: Network Initiated (NI), that is, server triggering, the server issues a Notification message to notify the client (the terminal device), and the terminal device triggers the DM session to initiate the FOTA upgrade process.
mode two: Client Initiated (CI), that is, the user, by clicking a menu on the terminal device, triggers the DM session to initiate the FOTA upgrade process.

In the process of implementing the present invention, an inventor found that the existing network triggering solution has at least the following drawbacks:
when receiving the Notification message, the terminal device does not know whether the server has a latest software upgrade package for the terminal device, the server notifies the terminal device of information of the latest software upgrade package during a DM session process; and in many cases, the terminal device triggers a DM session to initiate a FOTA operation after receiving the Notification message issued by the server, and connects the server to download the latest software upgrade package, but the result is no latest available software upgrade package which is efficient and suitable for the terminal device, thus wasting the user traffic and increasing the load of the server.

### Summary of the Invention

In view of this, embodiments of the present invention are expected to provide a method, device and system for triggering a DM session to effectively control a DM session triggering.

In order to achieve the abovementioned object, the technical solution of the present invention is realized as follows:

An embodiment of the present invention provides a triggering method for a DM session, and the method includes:
acquiring firmware version information corresponding to a latest software upgrade package, herein the firmware version information is used for determining by a terminal device whether to send a DM session request to a server and whether to initiate a Firmware Over The Air, FOTA, update operation;
sending a Notification message, herein the Notification message includes the firmware version information.

Alternatively, the sending the Notification message, and herein the Notification message includes the firmware version information, includes:
encoding the firmware version information by adopting a preset coding mode, to convert the firmware version information to corresponding coding information; herein, the preset coding mode includes, but is not limited to, a binary, octal or hexadecimal coding mode;
filling the coding information into an extension field of the Notification message and sending.

Alternatively, the firmware version information includes a vendor number, a device model number, a device ID number, and a software version model number.

An embodiment of the present invention further provides a triggering method for a device management, DM, session, and the method includes:
receiving a Notification message, herein the Notification message carries firmware version information corresponding to a latest software upgrade package;
determining whether to send a DM session request to a server and whether to initiate a Firmware Over The Air, FOTA, operation according to the firmware version information and its own current firmware version information.

Alternatively, the firmware version information includes: a vendor number, a device model number, a device ID number, and a software version model number.

Alternatively, the determining whether to send the DM session request to the server and whether to initiate the FOTA operation according to the firmware version information and its own current firmware version information includes:
comparing the firmware version information with the its own current firmware version information to obtain a first comparison result;
when the first comparison result is that the vendor number, the device model number and the device ID number in the firmware version information are different from the its own current vendor number, device model number and device ID number, ending the processing procedure;
when the first comparison result is that the vendor number, the device model number and the device ID number in the firmware version information are the same as the its own current vendor number, device model number and device ID number, comparing the software version model number in the firmware version information with the its own current software version model number to obtain a second comparison result;
when the second comparison result is that the software version model number is higher than the its own current software version model number, sending the DM session request to the server and initiating the FOTA operation;
when the second comparison result is that the software version model number is not higher than the its own current software version model number, ending the processing procedure.

An embodiment of the present invention further provides a server, and the server includes: an acquiring module and a sending module; herein,
the acquiring module is arranged to acquire firmware version information corresponding to a latest software upgrade package, herein the firmware version information is used for determining by a terminal device whether to send a device management, DM, session request to the server and whether to initiate a Firmware Over The Air, FOTA, operation;
the sending module is arranged to send a Notification message, herein the Notification message includes the firmware version information.

Alternatively, the sending module is arranged to encode the firmware version information by adopting a preset coding mode to convert the firmware version information to corresponding coding information, herein, the preset coding mode includes, but is not limited to, a binary, octal or hexadecimal coding mode; and fill the coding information into an extension field of the Notification message and send.

Alternatively, the firmware version information includes: a vendor number, a device model number, a device ID number and a software version model number.

An embodiment of the present invention further provides a terminal device, and the terminal device includes: a receiving module and a determining module; herein,
the receiving module is arranged to receive a Notification message carrying firmware version information corresponding to a latest software upgrade package;
the determining module is arranged to determine whether to send a device management, DM, session request to a server and whether to initiate a Firmware Over The Air, FOTA, operation according to the firmware version information and its own current firmware version information.

Alternatively, the firmware version information includes a vendor number, a device model number, a device ID number, and a software version model number.

Alternatively, the determining module is arranged to compare the firmware version information with the its own current firmware version information to obtain a first comparison result;
when the first comparison result is that the vendor number, the device model number and the device ID number in the firmware version information are different from the its own current vendor number, device model number and device ID number, end the processing procedure;
when the first comparison result is that the vendor number, the device model number and the device ID number in the firmware version information are the same as the its own current vendor number, device model number and device ID number, compare the software version model number in the firmware version information with the its own current software version model number to obtain a second comparison result;
when the second comparison result is that the software version model number is higher than the its own current software version model number, send the DM session request to the server and initiate the FOTA operation;
when the second comparison result is that the software version model number is not higher than the its own current software version model number, end the processing procedure.

An embodiment of the present invention further provides a triggering control system for a device management, DM, session, and the system includes: a server and a terminal device; herein,
the server is arranged to acquire firmware version information corresponding to a latest software upgrade package; send a Notification message, herein the Notification message includes the firmware version information; herein, the firmware version information is used for determining by the terminal device whether to send a DM session request to the server and whether to initiate a Firmware Over The Air, FOTA, update operation;
the terminal device is arranged to receive the Notification message, herein the Notification message carries the firmware version information corresponding to the latest software upgrade package; determine whether to send the DM session request to the server and whether to initiate the FOTA operation according to the firmware version information and its own current firmware version information.

Alternatively, the server is arranged to encode the firmware version information by adopting a preset coding mode to convert the firmware version information to corresponding coding information, herein, the preset coding mode includes, but is not limited to, a binary, octal or hexadecimal coding mode; and fill the coding information into an extension field of the Notification message and send.

Alternatively, the terminal device is arranged to: compare the received firmware version information with the its own current firmware version information to obtain a first comparison result;
when the first comparison result is that the vendor number, the device model number and the device ID number in the firmware version information are different from the its own current vendor number, device model number and device ID number, end the processing procedure;
when the first comparison result is that the vendor number, the device model number and the device ID number in the firmware version information are the same as the its own current vendor number, device model number and device ID number, compare the software version model number in the firmware version information with the its own current software version model number to obtain a second comparison result;
when the second comparison result is that the software version model number is higher than the its own current software version model number, send the DM session request to the server and initiate the FOTA operation;
when the second comparison result is that the software version model number is not higher than the its own current software version model number, end the processing procedure.

An embodiment of the present invention further provides a computer storage medium, and the computer storage medium stores computer executable instructions, and the computer executable instructions are used for executing the triggering method for the DM session applied in a server in an embodiment of the present invention.

An embodiment of the present invention further provides a computer storage medium, and the computer storage medium stores computer executable instructions, and the computer executable instructions are used for executing the triggering method for the DM session applied in a terminal device in an embodiment of the present invention.

The triggering method, device, system for the DM session and the computer storage medium provided in the embodiments of the present invention acquire the firmware version information corresponding to the latest software upgrade package, where the firmware version information is used for determining by the terminal device whether to send a DM session request to the server and whether to initiate a Firmware Over The Air (FOTA) update operation; send a Notification message, where the Notification message includes the firmware version information. Therefore, by sending the Notification message carrying the firmware version information to notify the terminal device, the terminal device can determine whether the latest software upgrade package suitable for the terminal device exists in the server according to the firmware version information when receiving the Notification message; the terminal device can trigger the DM session and initiate the FOTA operation only when determining the latest software upgrade package suitable for the terminal exists in the server, download the latest software upgrade package suitable for the terminal device in the terminal device through the Internet and install it, thus avoiding unnecessary traffic overheads and reducing the load on the server.

### Brief Description of the Drawings

FIG. 1 is a flow chart of realizing a triggering method for a DM session in accordance with a first embodiment of the present invention;
FIG. 2 is a schematic diagram of a structure of a Notification message in accordance with an embodiment of the present invention;
FIG. 3 is a flow chart of realizing a triggering method for a DM session in accordance with a second embodiment of the present invention;
FIG. 4 is a schematic diagram of a structure of a server in accordance with an embodiment of the present invention;
FIG. 5 is a schematic diagram of a structure of a terminal device in accordance with an embodiment of the present invention; and
FIG. 6 is a schematic diagram of a structure of a triggering system for a DM session in accordance with an embodiment of the present invention.

### Preferred Embodiments of the Invention

The embodiments of the present invention are applied to a triggering system for a DM session. The devices related to the embodiments of the present invention in the triggering system mainly include a server and a terminal device. In the triggering control system, the FOTA technology is used to provide upgrade service for the terminal device having an Internet connection function. When the server finds the latest software upgrade package, the server notifies the terminal device of the latest software upgrade package by sending a Notification message, and the terminal device controls and triggers the DM session and initiates a FOTA operation, so as to complete the downloading and installation of the latest software upgrade package suitable for the terminal device. Herein, the terminal device may be a terminal device having the Internet connection function, such as, a mobile phone, a tablet computer, a portable media player, a computer PC, a mobile Internet equipment, and the like.

Based on the abovementioned system architecture, a triggering process for the DM session provided in an embodiment of the present invention is as follows:
First, the server acquires firmware version information corresponding to the latest software upgrade package, carries the firmware version information into a Notification message and sends it to the terminal device. Generally, the firmware version information includes a vendor number, a device model number, a device ID number and a software version model number.

Then, the terminal device compares the firmware version information with the current firmware version information of the terminal device when receiving the Notification message sent by the server. If the vendor number, the device model number and the device ID number in the firmware version information are different from the current vendor number, device model number and device ID number of the terminal device, the processing procedure ends. If the vendor number, the device model number and the device ID number in the firmware version information are the same as the current vendor number, device model number and device ID number of the terminal device, compares the software version model number in the firmware version information with the current software version model number of the terminal device. If the software version model number is higher than the current software version model number of the terminal device, sends a DM session request to the server to connect with the server and initiates a FOTA operation. If the software version model number is not higher than the current software version model number of the terminal device, the processing procedure ends.

In the embodiment of the present invention, the server notifies the terminal device by sending a Notification message carrying the firmware version information, and when the terminal device receives the Notification message sent by the server, it can determine whether the server has a latest software upgrade package suitable for the terminal device according to the firmware version information. The terminal device triggers a DM session and initiates a FOTA operation only when determining that the server has the latest software upgrade package suitable for the terminal device, and downloads the latest software upgrade package suitable for the terminal device into the terminal device through the Internet and installs it. The terminal device does not trigger a DM session to initiate a FOTA operation when determining that the server does not have the latest software upgrade package suitable for the terminal device, thereby reducing redundant data due to unnecessary DM session triggering and avoiding unnecessary traffic overhead.

Hereinafter, specific embodiments of the present invention will be described with reference to the accompanying drawings.

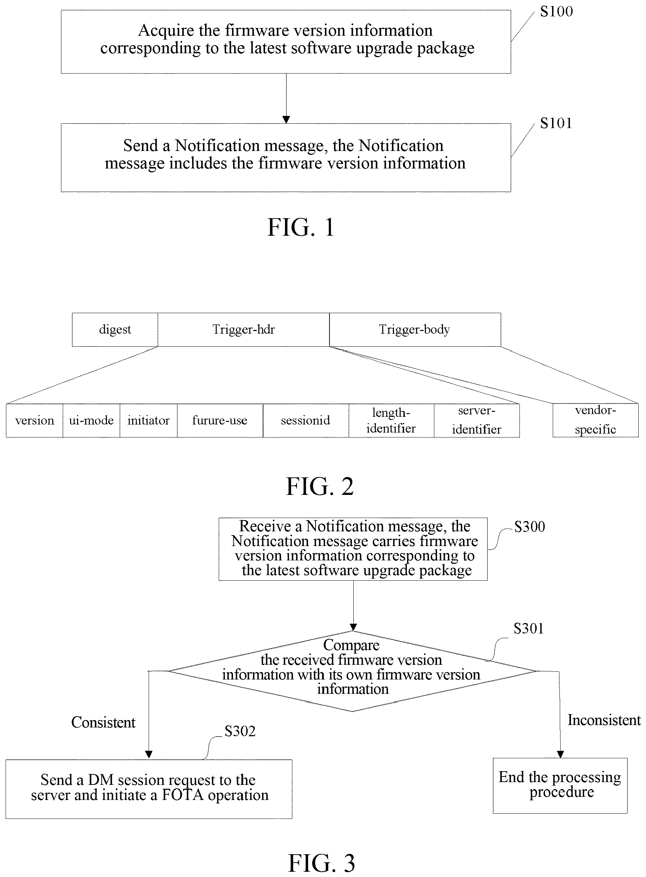

FIG. 1 is a flow chart of realizing a triggering method for a DM session in accordance with a first embodiment of the present invention; as shown in FIG. 1, a triggering process for the DM session provided in the embodiment of the present invention is applied to a service, and the specific implementation steps include the followings.

In step S100: the firmware version information corresponding to the latest software upgrade package is acquired; the firmware version information is used for the terminal device to determine whether to send a DM session request to the server and whether to initiate a firmware over the air (FOTA) update operation.

Herein, the firmware version information includes information such as a vendor number, a device model number, a device ID number and a software version model number. If the device is a mobile terminal device such as a mobile phone, the device ID number is an International Mobile Equipment Identity (IMEI) that uniquely identifies one mobile terminal device. The software version model number can be a version model number of the system software in the terminal device, or the version model number of the application software in the terminal device.

In step S101: a Notification message is sent, and the Notification message includes the firmware version information.

Herein, FIG. 2 is a schematic diagram of a structure of a Notification message in accordance with an embodiment of the present invention; as shown in FIG. 2, the meaning and function of each field are described in the related art and will not be repeated here.

Herein, the future-use field is an extension field of the Notification message, that is, an unused reserved field. Therefore, the future-use field can be used to carry the firmware version information. Since the digital coding information is stored in the Notification message, the firmware version information needs to be encoded to convert the firmware version information into digital coding information so as to be carried in the future-use field of the Notification message, the specific implementation method is as follows:
encoding the firmware version information by adopting a preset coding mode to convert the firmware version information to corresponding coding information; herein, the preset coding mode includes, but is not limited to, a binary, octal or hexadecimal coding mode;
filling the coding information into an extension field of the Notification message and send; specifically, the extension field may be the future-use field shown in FIG. 2.

It should be noted that the future-use field of the Notification message has a length of 27 bits and the corresponding decimal number range is 0 to 134217727, which can adequately accommodate the coding information corresponding to the firmware version information. Alternatively, a portion of the bits in the future-use field can be used to represent the firmware version information according to the needs of the actual scene. Herein, the coding mode of the firmware version information is not particularly limited.

Alternatively, the Notification message may be encrypted using an encryption algorithm, and the encrypted Notification message may be sent to ensure the security and reliability of the Notification message.

The embodiment of the present invention further provides a computer storage medium, and the computer storage medium stores computer executable instructions, and the computer executable instructions are used for executing the triggering method for the DM session applied in the server in the embodiment of the present invention.

FIG. 3 is a flow chart of realizing a triggering method for a DM session in accordance with a second embodiment of the present invention; as shown in FIG. 3, a triggering process for the DM session provided in the embodiment of the present invention is applied to a terminal device, and the specific implementation steps include:
In step S300, a Notification message is received, and the Notification message carries firmware version information corresponding to the latest software upgrade package.

Herein, the firmware version information includes: the vendor number, the device model number, the device ID number, and the software version model number and so on.

Alternatively, if the Notification message is the encrypted Notification message, the Notification message may be decrypted by using a decryption algorithm corresponding to the encryption algorithm, thereby enabling the security verification of the Notification message to ensure the security and reliability of the Notification message.

In step S301: the received firmware version information is compared with its own current firmware version information, and execute the step S302 when determining that they are consistent;
in particular, the present step may be divided into two sub-steps:
in step a: first, the vendor number, the device model number and the device ID number in the firmware version information is compared with the current vendor number, device model number and device ID number in its own firmware version information, obtain a first comparison result; when the first comparison result is that the vendor number, the device model number and the device ID number in the firmware version information are different from its own current vendor number, device model number and device ID number, end the processing procedure; when the first comparison result is that the vendor number, the device model number and the device ID number in the firmware version information are the same as its own current vendor number, device model number and device ID number, proceed to step b;
in step b: the software version model number in the firmware version information is compared with its own current software version model number, obtain a second comparison result; when the second comparison result is that the software version model number is higher than its own current software version model number, proceed to step S302; when the second comparison result is that the software version model number is not higher than its own current software version model number, end the processing procedure.

In step S302: a DM session request is sent to the server and a FOTA operation is initiated.

Herein, the specific processing procedure of sending a DM session request to the server and initiating a FOTA operation is the related art and will not be repeated herein.

According to another embodiment of the present invention, after sending a DM session request to the server and initiating a FOTA operation, when has received a DM session response message returned from the server, the DM session response message carries a downloading address of the latest software upgrade packet, and downloads the latest software upgrade package through the download address and install it.

The embodiment of the present invention further provides a computer storage medium, the computer storage medium stores the computer executable instructions, and the computer executable instructions are used for executing the triggering method for the DM session applied to the terminal device in an embodiment of the present invention.

In order to more clearly illustrate the embodiment of the present invention, the DM session triggering control process in the embodiment of the present invention will be described with reference to the third embodiment, the current firmware version information of the terminal device in the first embodiment is the vendor number Samsung Galaxy, the device model number S3I9308, the device ID number 2367836737, and the system software version model number Android-4.0.

### The third embodiment

First, the server acquires the firmware version information corresponding to the latest software upgrade package, carries the firmware version information in the Notification message and sends it to the terminal device. The firmware version information includes the vendor number Samsung Galaxy, the device model number S3I9308, the device ID number 2367836737 and the system software version model number Android-4.1.

When the terminal device receives the Notification message sent by the server, first the terminal device compares the firmware version information with the current firmware version information of the terminal device. Herein, the vendor number Samsung Galaxy, the device model number S3I9308 and the device ID number 2367836737 in the received firmware version information are the same as the current vendor number Samsung Galaxy, the device model number S3I9308 and the device ID number 2367836737 of the terminal device, then the terminal device continues to judge whether the system software version model number Android-4.1 in the received firmware version information is higher than the current system software version model number Android-4.0 of the terminal device. Herein, the system software version model number Android-4.1 in the firmware version information is higher than the current system software version model number Android-4.0 of the terminal device, that is, the latest software upgrade package is determined as the latest version, the terminal device sends a DM session request to the server and initiates a FOTA operation, and downloads the latest software upgrade package and installs it.

In order to realize the abovementioned method, the embodiment of the present invention further provides a server and a terminal device, and since the principles and methods for the server and the terminal device solving problems are similar, the implementation of the device can refer to the implementation of the abovementioned method, and will not be repeated.

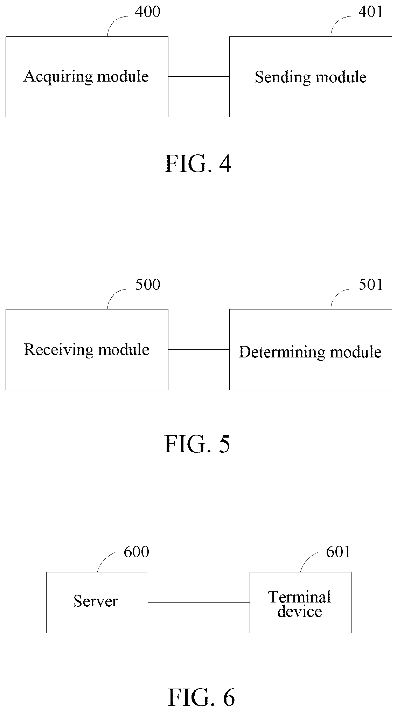

FIG. 4 is a schematic diagram of a structure of a server in accordance with an embodiment of the present invention; as shown in FIG. 4, the server provided in an embodiment of the present invention includes: an acquiring module 400 and a sending module 401.

The acquiring module 400 is arranged to acquire firmware version information corresponding to the latest software upgrade package. The firmware version information is used for the terminal device to determine whether to send a DM session request to the server and whether to initiate a FOTA operation. Herein, the firmware version information includes: a vendor number, a device model number, a device ID number and a software version model number.

The sending module 401 is arranged to send a Notification message; the Notification message includes the firmware version information.

The division method of the above functional modules is only a preferred implementation mode provided in the embodiment of the present invention, and the division method of the functional modules does not constitute a limitation to the present invention.

In a specific implementation, the sending module 401 is arranged to encode the firmware version information by adopting a preset coding mode to convert the firmware version information to corresponding coding information; herein, the preset coding mode includes, but is not limited to, a binary, octal or hexadecimal coding mode; fill the coding information into an extension field of the Notification message and send.

FIG. 5 is a schematic diagram of a structure of a terminal device in accordance with an embodiment of the present invention, and as shown in FIG. 5, the terminal device provided in the embodiment of the present invention includes: a receiving module 500 and a determining module 501.

The receiving module 500 is arranged to receive a Notification message, the Notification message carries the firmware version information corresponding to the latest software upgrade package; herein, the firmware version information includes: a vendor number, a device model number, a device ID number, and a software version model number.

The determining module 501 is arranged to determine whether to send a DM session request to the server and whether to initiate a FOTA operation according to the firmware version information and its own current firmware version information.

The division mode of the above functional modules is only a preferred implementation mode provided in the embodiment of the present invention, and the division mode of the functional modules does not constitute a limitation to the present invention.

In a specific implementation, the determining module 501 is arranged to: compare the firmware version information with its own current firmware version information to obtain a first comparison result;
when the first comparison result is that the vendor number, the device model number and the device ID number in the firmware version information are different from its own current vendor number, device model number and device ID number, end the processing procedure;
when the first comparison result is that the vendor number, the device model number and the device ID number in the firmware version information are the same as its own current vendor number, device model number and device ID number, compare the software version model number in the firmware version information with its own current software version model number to obtain a second comparison result;
when the second comparison result is that the software version model number is higher than its own current software version model number, send the DM session request to the server and initiate the FOTA operation;
when the second comparison result is that the software version model number is not higher than its own current software version model number, end the processing procedure.

In practical applications, the acquiring module 400 and the sending module 401 may be implemented by a central processing unit (CPU), a microprocessor unit (MPU), a digital signal processor (DSP), or a field programmable gate array (FPGA) provided in the server; the receiving module 500 and the determining module 501 may be implemented by a central processing unit (CPU), a microprocessor unit (MPU), a digital signal processor (DSP), or a field programmable gate array (FPGA) located in the terminal device.

The embodiment of the present invention further provides a triggering system for a DM session; FIG. 6 is a schematic diagram of a structure of a triggering system for a DM session in accordance with an embodiment of the present invention. As shown in FIG. 6, the triggering system for the DM session provided in an embodiment of the present invention includes: a server 600 and a terminal device 601.

The server 600 is arranged to acquire firmware version information corresponding to the latest software upgrade package; send a Notification message to the terminal device 601, the Notification message includes the firmware version information. Herein, the firmware version information is used for determining by the terminal device whether to send a DM session request to the server and whether to initiate a Firmware Over The Air (FOTA) update operation. Herein, the firmware version information includes: the vendor number, the device model number, the device ID number and the software version model number.

The terminal device 601 is arranged to receive the Notification message, the Notification message carries the firmware version information corresponding to the latest software upgrade package; determine whether to send the DM session request to the server and whether to initiate the FOTA operation according to the firmware version information and its own current firmware version information.

In a specific implementation, the server 600 is arranged to encode the firmware version information by adopting a preset coding mode to convert the firmware version information to corresponding coding information. Herein, the preset coding mode includes, but is not limited to, a binary, octal or hexadecimal coding mode; and fill the coding information into an extension field of the Notification message and send.

In a specific implementation, the terminal device 601 is arranged to compare the received firmware version information with its own current firmware version information to obtain a first comparison result;
when the first comparison result is that the vendor number, the device model number and the device ID number in the firmware version information are different from its own current vendor number, device model number and device ID number, end the processing procedure;
when the first comparison result is that the vendor number, the device model number and the device ID number in the firmware version information are the same as its own current vendor number, device model number and device ID number, compare the software version model number in the firmware version information with its own current software version model number to obtain a second comparison result;
when the second comparison result is that the software version model number is higher than its own current software version model number, send the DM session request to the server and initiate the FOTA operation;
when the second comparison result is that the software version model number is not higher than its own current software version model number, end the processing procedure.

It will be appreciated by those skilled in the art that embodiment of the present invention may be provided as a method, a system, or a computer program product. Thus, the present invention may take the form of a hardware embodiment, a software embodiment, or an embodiment combining software and hardware aspects. Moreover, the present invention may take the form of a computer program product implemented in one or more computer usable storage mediums (including but not limited to magnetic disk storage device and optical storage device, etc.) containing computer usable program codes therein.

The present invention is described with reference to flow charts and/or block diagrams of the method, the device (system) and the computer program product according to the embodiment of the present invention. It should be understood that each process and/or block in the flow charts and/or the block diagrams, as well as combinations of processes and/or blocks in the flow charts and/or the block diagrams may be implemented by computer program instructions. These computer program instructions may be provided to a processor of a general purpose computer, a special purpose computer, an embedded processor, or other programmable data processing device to produce a machine such that the instructions executed by the processor of a computer or another programmable data processing device can produce a device implementing the functions specified in one or more processes in the flow charts and/or one or more blocks in the block diagrams.

The computer program instructions may also be stored in a computer readable memory capable of directing a computer or other programmable data processing device to operate in a particular manner such that the instructions stored in the computer readable memory generate a product including the instruction device, and the instruction device implements the functions specified in one or more processes in the flow charts and/or one or more blocks in the block diagrams.

These computer program instructions may also be loaded in a computer or other programmable data processing device such that a series of operational steps are executed in the computer or the other programmable device to produce computer-implementable procedures, so that the instructions executed in the computer or the other programmable device can provide the steps which be used to implement the functions specified in one or more processes in the flow charts and/or one or more blocks in the block diagrams.

The above description is merely the implementing manner of the embodiments of the present invention, it should be noted that for those skilled in the art, improvements and retouches may be made without departing from the principles of the embodiments of the present invention, and the improvements and retouches should also be considered as the scope of protection of the embodiments of the present invention.

### Industrial Applicability

The embodiment of the present invention notifies the terminal device by sending a Notification message carrying the firmware version information, so that the terminal device can determine whether the latest software upgrade package suitable for the terminal device exists in the server according to the firmware version information when receiving the Notification message; the terminal device can trigger a DM session and initiate a FOTA operation only when determining that the latest software upgrade package suitable for the terminal exists in the server, download the latest software upgrade package suitable for the terminal device in the terminal device through the Internet and install it, thus avoiding unnecessary traffic overheads and reducing the load on the server.

## Claims

1. A triggering method for a device management, DM, session, comprising:
acquiring firmware version information corresponding to a latest software upgrade package, wherein the firmware version information is used for determining by a terminal device whether to send a DM session request to a server and whether to initiate a Firmware Over The Air, FOTA, update operation;
sending a Notification message, wherein the Notification message comprises the firmware version information.

2. The method of claim 1, wherein, the sending the Notification message, and wherein the Notification message comprises the firmware version information, comprises:
encoding the firmware version information by adopting a preset coding mode, to convert the firmware version information to corresponding coding information; wherein, the preset coding mode comprises, but is not limited to, a binary, octal or hexadecimal coding mode;
filling the coding information into an extension field of the Notification message and sending.

3. The method of claim 1 or 2, wherein, the firmware version information comprises: a vendor number, a device model number, a device ID number, and a software version model number.

4. A triggering method for a device management, DM, session, comprising:
receiving a Notification message, wherein the Notification message carries firmware version information corresponding to a latest software upgrade package;
determining whether to send a DM session request to a server and whether to initiate a Firmware Over The Air, FOTA, operation according to the firmware version information and its own current firmware version information.

5. The method of claim 4, wherein, the firmware version information comprises: a vendor number, a device model number, a device ID number, and a software version model number.

6. The method of claim 5, wherein, the determining whether to send the DM session request to the server and whether to initiate the FOTA operation according to the firmware version information and its own current firmware version information, comprises:
comparing the firmware version information with the its own current firmware version information to obtain a first comparison result;
when the first comparison result is that the vendor number, the device model number and the device ID number in the firmware version information are different from the its own current vendor number, device model number and device ID number, ending the processing procedure;
when the first comparison result is that the vendor number, the device model number and the device ID number in the firmware version information are the same as the its own current vendor number, device model number and device ID number, comparing the software version model number in the firmware version information with the its own current software version model number to obtain a second comparison result;
when the second comparison result is that the software version model number is higher than the its own current software version model number, sending the DM session request to the server and initiating the FOTA operation;
when the second comparison result is that the software version model number is not higher than the its own current software version model number, ending the processing procedure.

7. A server, comprising: an acquiring module and a sending module; wherein,
the acquiring module is arranged to acquire firmware version information corresponding to a latest software upgrade package, wherein the firmware version information is used for determining by a terminal device whether to send a device management, DM, session request to the server and whether to initiate a Firmware Over The Air, FOTA, operation;
the sending module is arranged to send a Notification message, wherein the Notification message comprises the firmware version information.

8. The server of claim 7, wherein, the sending module is arranged to encode the firmware version information by adopting a preset coding mode to convert the firmware version information to corresponding coding information, wherein, the preset coding mode comprises, but is not limited to, a binary, octal or hexadecimal coding mode; and fill the coding information into an extension field of the Notification message and send.

9. The server of claim 7 or 8, wherein, the firmware version information comprises: a vendor number, a device model number, a device ID number and a software version model number.

10. A terminal device, comprising: a receiving module and a determining module; wherein,
the receiving module is arranged to receive a Notification message carrying firmware version information corresponding to a latest software upgrade package;
the determining module is arranged to determine whether to send a device management, DM, session request to a server and whether to initiate a Firmware Over The Air, FOTA, operation according to the firmware version information and its own current firmware version information.

11. The terminal device of claim 10, wherein, the firmware version information comprises: a vendor number, a device model number, a device ID number, and a software version model number.

12. The terminal device of claim 11, wherein, the determining module is arranged to: compare the firmware version information with the its own current firmware version information to obtain a first comparison result;
when the first comparison result is that the vendor number, the device model number and the device ID number in the firmware version information are different from the its own current vendor number, device model number and device ID number, end the processing procedure;
when the first comparison result is that the vendor number, the device model number and the device ID number in the firmware version information are the same as the its own current vendor number, device model number and device ID number, compare the software version model number in the firmware version information with the its own current software version model number to obtain a second comparison result;
when the second comparison result is that the software version model number is higher than the its own current software version model number, send the DM session request to the server and initiate the FOTA operation;
when the second comparison result is that the software version model number is not higher than the its own current software version model number, end the processing procedure.

13. A triggering system for a device management, DM, session, comprising: a server and a terminal device; wherein,
the server is arranged to acquire firmware version information corresponding to a latest software upgrade package; send a Notification message, wherein the Notification message comprises the firmware version information; wherein, the firmware version information is used for determining by the terminal device whether to send a DM session request to the server and whether to initiate a Firmware Over The Air, FOTA, update operation;
the terminal device is arranged to receive the Notification message, wherein the Notification message carries the firmware version information corresponding to the latest software upgrade package; determine whether to send the DM session request to the server and whether to initiate the FOTA operation according to the firmware version information and its own current firmware version information.

14. The system of claim 13, wherein, the server is arranged to encode the firmware version information by adopting a preset coding mode to convert the firmware version information to corresponding coding information, wherein, the preset coding mode comprises, but is not limited to, a binary, octal or hexadecimal coding mode; and fill the coding information into an extension field of the Notification message and send.

15. The system of claim 13, wherein, the terminal device is arranged to: compare the received firmware version information with the its own current firmware version information to obtain a first comparison result;
when the first comparison result is that the vendor number, the device model number and the device ID number in the firmware version information are different from the its own current vendor number, device model number and device ID number, end the processing procedure;
when the first comparison result is that the vendor number, the device model number and the device ID number in the firmware version information are the same as the its own current vendor number, device model number and device ID number, compare the software version model number in the firmware version information with the its own current software version model number to obtain a second comparison result;
when the second comparison result is that the software version model number is higher than the its own current software version model number, send the DM session request to the server and initiate the FOTA operation;
when the second comparison result is that the software version model number is not higher than the its own current software version model number, end the processing procedure.

16. A computer storage medium, wherein the computer storage medium stores computer executable instructions, and the computer executable instructions are used for executing the triggering method for the DM session of any one of claims 1 to 3.

17. A computer storage medium, wherein the computer storage medium stores computer executable instructions, and the computer executable instructions are used for executing the triggering method for the DM session of any one of claims 4 to 6.
